Europäisches Patentamt

European Patent Office

Office européen des brevets

(19)

(11) Veröffentlichungsnummer: **0 310 795 B1**

(12) EUROPÄISCHE PATENTSCHRIFT

(45) Veröffentlichungstag der Patentschrift: **10.03.93**

(51) Int. Cl.⁵: **G11B 11/10**, G11B 7/12

(21) Anmeldenummer: **88113490.2**

(22) Anmeldetag: **19.08.88**

Die Akte enthält technische Angaben, die nach dem Eingang der Anmeldung eingereicht wurden und die nicht in dieser Patentschrift enthalten sind.

(54) Optische Abtastvorrichtung und Verfahren für eine optische Abtastvorrichtung.

(30) Priorität: **30.09.87 DE 3732874**

(43) Veröffentlichungstag der Anmeldung:
**12.04.89 Patentblatt 89/15**

(45) Bekanntmachung des Hinweises auf die Patenterteilung:
**10.03.93 Patentblatt 93/10**

(84) Benannte Vertragsstaaten:
**AT BE CH DE ES FR GB GR IT LI LU NL SE**

(56) Entgegenhaltungen:
**FR-A- 2 591 787**
**US-A- 4 451 863**

**PATENT ABSTRACTS OF JAPAN, Band 10, Nr. 102 (P-448)[2159], 18. April 1986, Seite 3 P 448; & JP-A-60 234 235**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Morimoto, Yasuaki**
**Tallardstrasse 20**
**W-7730 Villingen-Schwenning(DE)**
Erfinder: **Büchler, Christian**
**Keltenweg 3**
**W-7730 VS-Marbach(DE)**
Erfinder: **Zucker, Friedheim**
**Frankenstrasse 5**
**W-7730 Villingen-Schwenningen(DE)**
Erfinder: **Schröder, Heinz-Jörg**
**Terra-Wohnpark 9**
**W-7730 VS-Marbach(DE)**

# Beschreibung

Die Erfindung betrifft ein Verfahren für eine optische Abtastvorrichtung zum Lesen und/oder Beschreiben eines optischen und/oder eines magneto-optischen Aufzeichnungsträgers, wobei eine Lichtquelle Licht auf den Aufzeichnungsträger strahlt und wobei das vom Aufzeichnungsträger reflektierte Licht in Abhängigkeit von seiner Polarisationsrichtung auf einen ersten Photodetektor oder auf einen zweiten Photodetektor gelenkt wird, wobei aus der Differenz der Photospannungen des ersten und zweiten Photodetektors das Datensignal gewonnen wird, das die in den magnetischen Domänen des Aufzeichnungsträgers gespeicherten Daten enthält, und wobei aus der Summe der Photospannungen des ersten und zweiten Photodetektors das Datensignal gewonnen wird, das die in den Pits des Aufzeichnungsträgers gespeicherten Daten enthält.

Die Erfindung betrifft ferner ein Verfahren für eine optische Abtastvorrichtung zum Lesen und/oder Beschreiben eines optischen und/oder eines magneto-optischen Aufzeichnungsträgers, bei dem eine Lichtquelle Licht auf den Aufzeichnungsträger strahlt der Aufzeichnungsträger einen Teil des Lichts auf einen ersten Photodetektor reflektiert, an dessen Ausgang das Datensignal abnehmbar ist, das die mittels Pits auf dem Aufzeichnungsträger gespeicherten Daten enthält.

Die Erfindung betrifft weiter ein Verfahren für eine optische Abtastvorrichtung zum Lesen und/oder Beschreiben eines optischen und/oder eines magneto-optischen Aufzeichnungsträgers, wobei eine Lichtquelle Licht auf den Aufzeichnungsträger strahlt, wobei das vom Aufzeichnungsträger reflektierte Licht in Abhängigkeit von seiner Polarisationsrichtung auf einen ersten Photodetektor oder auf einen zweiten Photodetektor gelenkt wird und wobei aus der Differenz der Photospannungen des ersten und zweiten Photodetektors das Datensignal gewonnen wird, das die in den magnetischen Domänen des Aufzeichnungsträgers gespeicherten Daten enthält.

Die Erfindung betrifft schließlich ein Verfahren für eine optische Abtastvorrichtung zum Lesen und/oder Beschreiben eines optischen und/oder eines magneto-optischen Aufzeichnungsträgers, wobei eine Lichtquelle Licht auf den Aufzeichnungsträger strahlt und wobei das vom Aufzeichnungsträger reflektierte Licht in Abhängigkeit von seiner Polarisationsrichtung auf einen ersten Photodetektor oder auf einen zweiten Photodetektor gelenkt wird, wobei aus der Summe der Photospannungen des ersten und zweiten Photodetektors das Datensignal gewonnen wird, das die in den Pits des Aufzeichnungsträgers gespeicherten Daten enthält, und wobei die Differenz der Photospannungen des ersten und zweiten Photodetektors gebildet wird.

Ein bekannter optischer Aufzeichnungsträger ist z.B. die CD-Platte, bei der auf die lichtdurchlässige Schicht eine lichtreflektierende Aluminiumschicht folgt. Die lichtreflektierende Aluminiumschicht weist Vertiefungen, sogenannte Pits, auf, welche die auf der CD-Platte gespeicherten Daten darstellen. Mittels einer optischen Abtastvorrichtung sind die Daten von der CD-Platte lesbar, weil das Reflexionsverhalten der lichtreflektierenden Aluminiumschicht von dem Muster abhängt, das die Vertiefungen auf der Platte bilden. Von einer Vertiefung, häufig auch groove genannt, wird weniger Licht reflektiert als von einem Hügel, der oft auch als land bezeichnet wird.

An der Intensität des von der CD-Platte reflektierten Lichts erkennt daher die optische Abtastvorrichtung, ob es sich bei dem abgetasteten Bit z.B. um eine logische Eins oder eine logische Null handelt.

Ein weiterer derartiger optischer Aufzeichnungsträger, unter der Bezeichnung magneto-optische Platte bekannt, ist in dem Aufsatz "Magnetooptische Versuche dauern an" in Funkschau 13, 20. Juni 1986, auf Seite 37 - 41 beschrieben.

Im Gegensatz zu einer herkömmlichen CD-Platte weist eine magneto-optische Platte keine Pits auf. Hinter der lichtdurchlässigen Schicht befindet sich eine magnetische Schicht, in die Daten aufzeichenbar und von der Daten lesbar sind. Es wird zunächst erläutert, wie Daten auf eine magneto-optische Platte geschrieben werden.

Mittels eines auf die Platte fokussierten Laserstrahls wird die magnetische Schicht über die Curie-Temperatur erhitzt. Meist genügt es jedoch, die magnetische Schicht nur bis zu der etwas unterhalb der Curie-Temperatur liegenden Kompensationstemperatur zu erwärmen. Hinter dem Brennpunkt auf der Platte ist ein Elektromagnet angeordnet, der den vom Laserstrahl erhitzten Bereich in die eine oder andere Magnetisierungsrichtung magnetisiert. Weil nach Abschalten des Laserstrahls die erhitzte Stelle wieder unter die Curie-Temperatur abkühlt, bleibt die vom Elektromagneten festgelegte Magnetisierungsrichtung erhalten; sie friert sozusagen ein. Auf diese Weise werden die einzelnen Bits in Domänen unterschiedlicher Magnetisierungsrichtung gespeichert. Dabei entspricht z.B. die eine Magnetisierungsrichtung einer Domäne einer logischen Eins, während die entgegengesetzte Magnetisierungsrichtung eine logische Null darstellt.

Zum Lesen der Daten macht man sich den Kerr-Effekt zunutze. Die Polarisationsebene eines linear polarisierten Lichtstrahls wird bei der Reflexion an einem magnetisierten Spiegel um einen meßbaren Winkel gedreht. Je nachdem, in welche Richtung der Spiegel magnetisiert ist, wird die Polarisationsebene des reflektierten Lichtstrahls nach rechts oder nach links gedreht. Weil aber die einzelnen Domänen auf der Platte wie magnetisierte Spiegel wirken, wird die Polarisationsebene eines abtastenden Lichtstrahls je nach der Magnetisierungsrichtung der gerade abgetasteten Domäne um einen meßbaren Winkel nach links oder rechts gedreht.

An der Drehung der Polarisationsebene des von der Platte reflektierten Lichtstrahls erkennt die optische Abtastvorrichtung, welches Bit vorliegt, eine logische Eins oder eine logische Null. Im Gegensatz zu einer CD-Platte mit Pits ist eine magneto-optische Platte nahezu beliebig oft lösch- und wieder beschreibbar.

Aus der JP-A-60234235 ist eine optische Abtastvorrichtung zum Lesen einer magneto-optischen und einer optischen Platte bekannt. Das Licht eines Lasers wird auf die optische oder die magneto-optische Platte fokussiert und von der Platte in Abhängigkeit von seiner Polarisationsrichtung auf einen ersten oder auf einen zweiten Photodetektor reflektiert. Beim Lesen einer magneto-optischen Platte wird das Datensignal aus der Differenz der Photospannungen des ersten und zweiten Photodetektors erzeugt, während beim Abtasten einer optischen Platte das Datensignal aus der Summe der Photospannungen des ersten und zweiten Photodetektors gewonnen wird.

Ein neuartiger Aufzeichnungsträger ist eine Kombination aus einer CD-Platte und einer magneto-optischen Platte. Bei diesem Aufzeichnungsträger sind Daten sowohl in den magnetischen Domänen als auch in Pits gespeichert.

Es ist daher Aufgabe der Erfindung, eine optische Abtastvorrichtung anzugeben, die sowohl geeignet ist, eine CD-Platte, als auch eine magneto-optische Platte als auch eine neuartige Kombination aus beiden Aufzeichnungsträgern zu lesen.

Bei einem Verfahren für eine optische Abtastvorrichtung zum Lesen und/oder Beschreiben eines optischen und/oder eines magneto-optischen Aufzeichnungsträgers, wobei eine Lichtquelle Licht auf den Aufzeichnungsträger strahlt und wobei das vom Aufzeichnungsträger reflektierte Licht in Abhängigkeit von seiner Polarisationsrichtung auf einen ersten Photodetektor oder auf einen zweiten Photodetektor gelenkt wird, wobei aus der Differenz der Photospannungen des ersten und zweiten Photodetektors das Datensignal gewonnen wird, das die in den magnetischen Domänen des Aufzeichnungsträgers gespeicherten Daten enthält, und wobei aus der Summe der Photospannungen des ersten und zweiten Photodetektors das Datensignal gewonnen wird, das die in den Pits des Aufzeichnungsträgers gespeicherten Daten enthält, wird diese Aufgabe dadurch gelöst, daß die Summe der Photospannungen des ersten und zweiten Photodetektors die Lichtleistung der Lichtquelle moduliert oder daß ein vierter Photodetektor vorgesehen ist, der das vom Aufzeichnungsträger reflektierte Licht empfängt und dessen Ausgangssignal die Lichtleistung der Lichtquelle moduliert.

Bei einem Verfahren für eine optische Abtastvorrichtung zum Lesen und/oder Beschreiben eines optischen und/oder eines magneto-optischen Aufzeichnungsträgers, bei dem eine Lichtquelle Licht auf den Aufzeichnungsträger strahlt, der Aufzeichnungsträger einen Teil des Lichts auf einen ersten Photodetektor reflektiert, an dessen Ausgang das Datensignal abnehmbar ist, das die mittels Pits auf dem Aufzeichnungsträger gespeicherten Daten enthält, wird diese Aufgabe dadurch gelöst, daß ein Teil des von der Lichtquelle ausgestrahlten Lichts den Aufzeichnungsträger durchstrahlt, daß das den Aufzeichnungsträger durchstrahlende Licht in Abhängigkeit von seiner Polarisationsrichtung von einem hinter dem Aufzeichnungsträger vorgesehenen Polarisator auf einen zweiten Photodetektor oder auf einen dritten Photodetektor gelenkt wird und daß die Ausgänge des zweiten und dritten Photodetektors mit den Eingängen eines Differenzverstärkers verbunden sind, an dessen Ausgang das Datensignal abnehmbar ist, das die in den magnetischen Domänen des Aufzeichnungsträgers gespeicherten Daten enthält.

Bei einem Verfahren für eine optische Abtastvorrichtung zum Lesen und/oder Beschreiben eines optischen und/oder eines magneto-optischen Aufzeichnungsträgers, bei dem eine Lichtquelle Licht auf den Aufzeichnungsträger strahlt, wird diese Aufgabe dadurch gelöst, daß ein Teil des von der Lichtquelle ausgestrahlten Lichts den Aufzeichnungsträger durchstrahlt, daß das den Aufzeichnungsträger durchstrahlende Licht in Abhängigkeit von seiner Polarisationsrichtung von einem hinter dem Aufzeichnungsträger vorgesehenen Polarisator auf einen zweiten Photodetektor oder auf einen dritten Photodetektor gelenkt wird, daß die Ausgänge des zweiten und dritten Photodetektors mit den Eingängen eines Differenzverstärkers verbunden sind, an dessen Ausgang das Datensignal abnehmbar ist, das die in den magnetischen Domänen des Aufzeichnungsträgers gespeicherten Daten enthält, daß die Summe der Photospannungen des zweiten und dritten Photodetektors die Lichtleistung der Lichtquelle moduliert und daß die Summe der Photospannungen des zweiten und dritten Photodetektors das die mittels Pits auf dem Aufzeichnungsträger gespeicherten Daten enthält.

Bei einem Verfahren für eine optische Abtastvorrichtung zum Lesen und/oder Beschreiben eines optischen und/oder eines magneto-optischen Aufzeichnungsträgers, wobei eine Lichtquelle Licht auf den Aufzeichnungsträger strahlt, wobei das vom Aufzeichnungsträger reflektierte Licht in Abhängigkeit von seiner Polarisationsrichtung auf einen ersten Photodetektor oder auf einen zweiten Photodetektor gelenkt wird und wobei aus der Differenz der Photospannungen des ersten und zweiten Photodetektors das Datensignal gewonnen wird, das die in den magnetischen Domänen des Aufzeichnungsträgers gespeicherten Daten enthält, wird diese Aufgabe dadurch gelöst, daß das Datensignal, das die mittels Pits im Aufzeichnungsträger gespeicherten Daten enthält, nach dem Durchlichtverfahren mittels eines hinter dem Aufzeichnungsträger vorgesehenen dritten Photodetektors gewonnen wird.

Bei einem Verfahren für eine optische Abtastvorrichtung zum Lesen und/oder Beschreiben eines optischen und/oder eines magneto-optischen Aufzeichnungsträgers, wobei eine Lichtquelle Licht auf den Aufzeichnungsträger strahlt und wobei das vom Aufzeichnungsträger reflektierte Licht in Abhängigkeit von seiner Polarisationsrichtung auf einen ersten Photodetektor oder auf einen zweiten Photodetektor gelenkt wird, wobei aus der Summe der Photospannungen des ersten und zweiten Photodetektors das Datensignal gewonnen wird, das die in den Pits des Aufzeichnungsträgers gespeicherten Daten enthält, und wobei die Differenz der Photospannungen des ersten und zweiten Photodetektors gebildet wird, wird diese Aufgabe dadurch gelöst, daß das Differenzsignal der Photospannungen des ersten und zweiten Photodetektors durch deren Summensignal geteilt wird und daß das so gebildete Quotientensignal das Datensignal darstellt, das in den magnetischen Domänen gespeichert ist.

Es zeigen

| Figur 1 | ein erstes Ausführungsbeispiel der Erfindung; |
| Figur 2 | ein zweites Ausführungsbeispiel der Erfindung; |
| Figur 3 | ein drittes Ausführungsbeispiel der Erfindung; |
| Figur 4 | ein viertes Ausführungsbeispiel der Erfindung; |
| Figur 5 | ein fünftes Ausführungsbeispiel der Erfindung; |
| Figur 6 | ein sechstes Ausführungsbeispiel der Erfindung; |
| Figur 7 | ein siebtes Ausführungsbeispiel der Erfindung; |
| Figur 8 und 9 | einen neuartigen magneto-optischen Aufzeichnungsträger. |

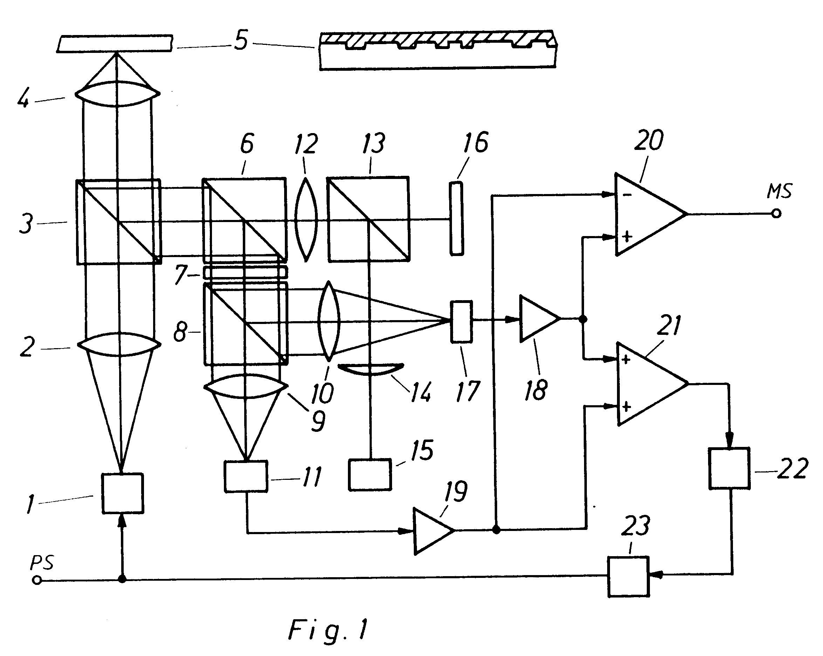

In Figur 1 wird der die Daten abtastende Lichtstrahl von einer Lichtquelle 1, meist eines Lasers, über eine Linse 2, einen Prismenstrahlteiler 3 und eine weitere Linse 4 auf den neuartigen Aufzeichnungsträger 5 fokussiert, der den Lichtstrahl über die Linse 4 zurück zum Prismenstrahlteiler 3 reflektiert. Vom Prismenstrahlteiler 3 wird der reflektierte Lichtstrahl im rechten Winkel auf einen Prismenstrahlteiler 6 gelenkt. Der den Prismenstrahlteiler 6 Gerade durchstrahlende Lichtstrahl trifft über eine Linse 12 auf einen Prismenstrahlteiler 13, der einen Lichtstrahl auf einen Photodetektor 16 lenkt, der z.B. aus zwei Photodioden E und F aufgebaut sein kann. Aus deren Ausgangssignalen ES und FS wird, wie es bei einer optischen Abtastvorrichtung, die nach dem Dreistrahlverfahren arbeitet, einem sogenannten three-beam optical pick-up, bekannt ist, das Spurfehlersignal TE = ES - FS in einem Differenzverstärker gebildet. Vom Prismenstrahlteiler 13 wird aber auch ein Lichtstrahl rechtwinklig über eine Linse 14 auf einen Photodetektor 15 gelenkt, der beispielsweise aus vier quadratförmigen Photodioden A, B, C und D aufgebaut sein kann. Aus deren Ausgangssignalen AS, BS, CS und DS wird, wie es bei optischen Abtastvorrichtungen, die nach den Dreistrahlverfahren arbeiten, üblich ist, das Fokusfehlersignal FE = (AS + CS) - (BS + DS) gebildet.

Der Prismenstrahlteiler 6 lenkt jedoch auch einen Lichtstrahl rechtwinklig über eine λ/2 Platte 7 zu einem Polarisationsstrahlteiler 8. Im Polarisationsstrahlteiler 8 wird nun der Lichtstrahl über eine Linse 9 auf einen ersten Photodetektor 11 gelenkt, wenn seine Polarisationsebene in die eine Richtung gedreht ist. Dagegen wird der Lichtstrahl vom Polarisationsstrahlteiler 8 über eine Linse 10 auf einen zweiten Photodetektor 17 gelenkt, wenn seine Polarisationsebene in die andere Richtung gedreht ist. Die Photospannung des ersten Photodetektors 11 wird über einen Verstärker 19 dem ersten Eingang eines Summationsverstärkers 21 und dem Subtraktionseingang eines Differenzverstärkers 20 zugeführt. Die Photospannung des zweiten Photodetektors 17 wird über einen Verstärker 18 dem zweiten Eingang des Summationsverstärkers 21 und dem Additionseingang des Differenzverstärkers 20 zugeführt. Der Ausgang des Summationsverstärkers 20 ist über einen Regler 22 mit dem Eingang eines Modulators 23 verbunden, der die Lichtleistung des Lasers 1 steuert.

Wegen der Pits auf dem neuartigen Aufzeichnungsträger 5 würde die Intensität des reflektierten Lichts ständig schwanken und sich störend dem Datensignal am Ausgang des Differenzverstärkers 20 überlagern. Um diese Überlagerung zu vermeiden, wird die Intensität des reflektierten Lichts mittels des Modulators 23 konstant gehalten, der den Laser 1 ansteuert.

Deshalb ist am Ausgang des Differenzverstärkers 20 das Datensignal MS abnehmbar, das die in den magnetischen Domänen des neuartigen Aufzeichnungsträgers gespeicherten Daten darstellt. Die in den Pits enthaltenen Daten gehen dennoch nicht verloren, denn sie sind im Regelsignal des Modulators 23 enthalten. Daher ist am Ausgang des Modulators 23 gleichzeitig das Datensignal PS abnehmbar, das die in den Pits enthaltenen Daten darstellt.

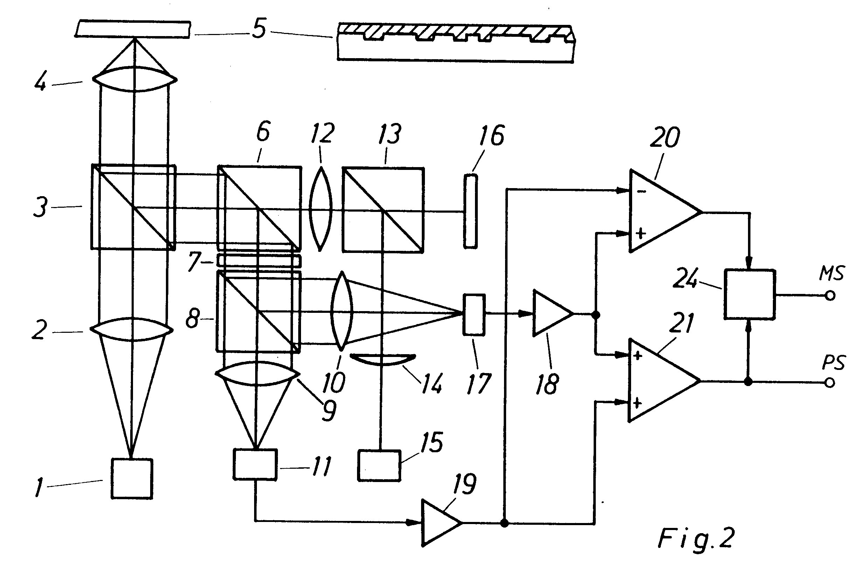

Das zweite in Figur 2 gezeigte Ausführungsbeispiel unterscheidet sich nur geringfügig vom ersten Ausführungsbeispiel. Der Regler 22 sowie der Modulator 23 entfallen. Statt dessen ist der Ausgang des Summationsverstärkers 21 mit dem einen Eingang eines Teilers 24 verbunden, dessen anderer Eingang mit dem Ausgang des Differenzverstärkers 20 verbunden ist. Zwar liegt beim zweiten Ausführungsbeispiel am Ausgang des Differenzverstärkers 20 das Modulationsprodukt aus dem einen Datensignal MS, das die in den magnetischen Domänen gespeicherten Daten darstellt, und dem anderen Datensignal PS, das die in den Pits enthaltenen Daten darstellt, jedoch wird das Modulationsprodukt im Teiler 24 durch das andere Datensignal PS geteilt, so daß am Ausgang des Teilers 24 nur noch das eine Datensignal MS anliegt, das von den magnetischen Domänen herrührt. Gleichzeitig ist am Ausgang des Summationsverstärkers 21 das andere Datensignal PS abnehmbar, das die in den Pits enthaltenen Daten darstellt.

Wenn z.B. die Tiefe der Pits auf dem neuartigen Aufzeichnungsträger geringer gewählt wird als etwa 1/4 der Wellenlänge 2 des abtastenden Lichtstrahls, wie es bei CD-Platten der Fall ist, kann die Leistung des Lasers verringert werden. Dadurch wird der neuartige Aufzeichnungsträger beim Lesen weniger erhitzt, so daß der Sicherheitsabstand zur kritischen Curie-Temperatur größer wird. Eine Tiefe der Pits von etwa 1/10 der Wellenlänge des abtastenden Lichts hat sich als günstig erwiesen, weil die Modulation in diesem Fall deutlich geringer ist.

Es wird nun an Hand der Figur 3 ein drittes Ausführungsbeispiel der Erfindung beschrieben und erläutert, das zum Lesen eines neuartigen Aufzeichnungsträgers geeignet ist, der in den Figuren 8 und 9 abgebildet ist.

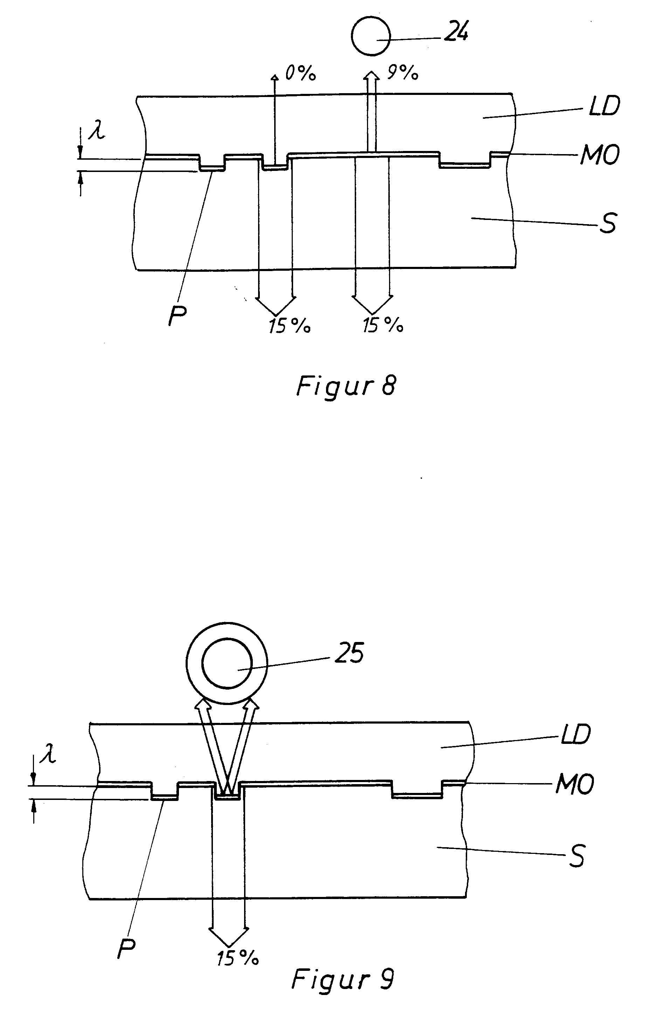

Wenn die magneto-optische Schicht MO etwa gleich dick wie oder dünner als die Wellenlänge des abtastenden Lichts gewählt wird, strahlt ein Teil des Lichts durch. Die magneto-optische Schicht MO muß einerseits so dünn sein, daß sie lichtdurchlässig ist, und andererseits aber so dick sein, daß an ihr ein meßbarer Kerreffekt auftritt. Die Wahl der Dicke der magneto-optischen Schicht MO hängt daher auch von der Wahl des Schichtmaterials ab. In Figur 8 ist gezeigt, daß bei einer Pittiefe von $\lambda$ an den Stellen, wo keine Vertiefungen P sind, etwa 9 % des auftreffenden Lichts durchstrahlen, dagegen etwa 15 % reflektiert werden; der Rest wird absorbiert. Die magneto-optische Schicht MO wird durch eine lichtdurchlässige Schicht LD, deren Brechungsindex $n_1 = 1$ beträgt, vor Beschädigungen geschützt. Mit S ist eine weitere Schutzschicht bezeichnet.

In Figur 9 ist die Aufteilung des Lichtes an einem Pit P, einer Vertiefung, dargestellt, deren Tiefe der Wellenlänge des abtastenden Lichts entspricht. Es werden wieder etwa 15 % des auftreffenden Lichtes reflektiert. Wegen der Pit-Tiefe von $\lambda$ entstehen jedoch hinter dem Aufzeichnungsträger Beugungsmuster, denn infolge des Gangunterschieds von $\lambda/2$ interferieren diejenigen Lichtanteile, die durch eine Vertiefung strahlen, mit denjenigen Lichtanteilen, die durch die dickere Schicht strahlen, welche die Vertiefung umgibt. Um die magneto-optische Schicht MO vor Beschädigungen wie z.B. Kratzer zu schützen, ist eine lichtdurchlässige Schicht LD vorgesehen.

Weil wegen der Pit-Tiefe von $\lambda/2$ der Gangunterschied zwischen dem an einem Hügel und an einer Vertiefung reflektierten Licht $\lambda/2 + \lambda/2 = \lambda$ beträgt, wird das an der magneto-optischen Schicht MO reflektierte Licht, das die magneto-optisch gespeicherten Daten abtastet, nicht durch das Pitmuster verfälscht. Anstelle von $\lambda/2$ kann die Pit-Tiefe auch ungeradzahlige Vielfache von $\lambda/2$ betragen. Es kommt nur darauf an, daß der Gangunterschied $\lambda$ oder ganzzahlige Vielfache von $\lambda$ beträgt.

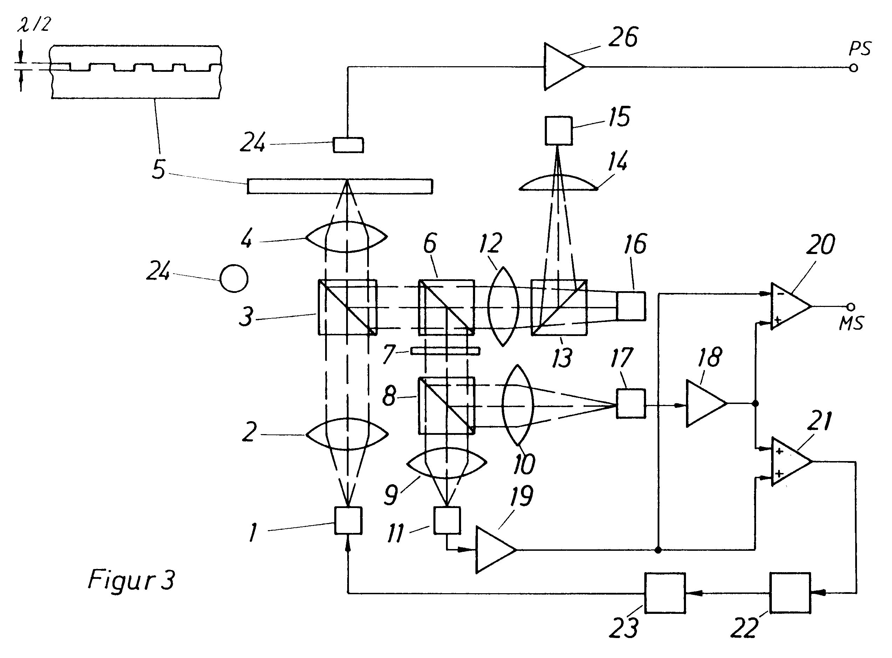

Das in Figur 3 gezeigte Ausführungsbeispiel der Erfindung unterscheidet sich vom Ausführungsbeispiel, das in der Figur 1 abgebildet ist, dadurch, daß hinter dem Aufzeichnungsträger 5 ein beispielsweise kreisförmiger Photodetektor 24 vorgesehen ist, dessen Ausgang mit dem Eingang eines Verstärkers 26 verbunden ist.

Mittels des kreisförmigen Photodetektors 24 werden die Pits erkannt, weil ohne Pit etwa 9 % des Lichts auf den Photodetektor 24 treffen, bei einem Pit wegen der Interferenzen dagegen im Idealfall überhaupt kein Licht auf den Photodetektor 24 fällt. Es ist deshalb am Ausgang des Verstärkers 26 das Datensignal PS abnehmbar, das die mittels der Pits auf dem Aufzeichnungsträger 5 gespeicherten Daten enthält.

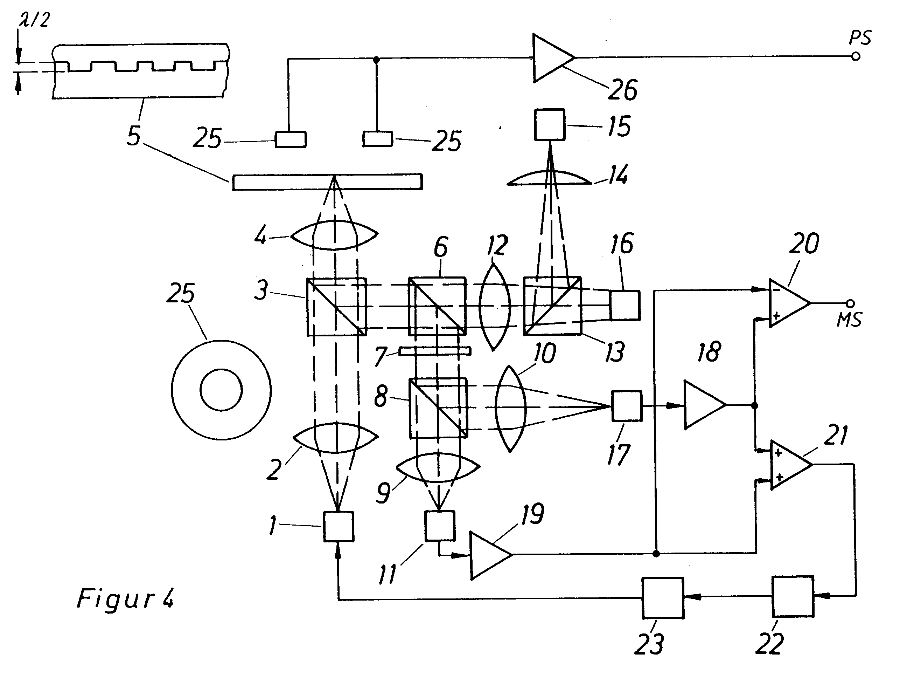

Bei dem in Figur 4 gezeigten vierten Ausführungsbeispiel der Erfindung ist anstelle eines kreisförmigen Photodetektors ein beispielsweise ringförmiger Photodetektor 25 vorgesehen, der die Beugungsmaxima erster Ordnung detektiert.

Weil sich mittels des ringförmigen Photodetektors 25 die Beugungsmaxima erster Ordnung bei einem Pit nachweisen lassen, können die mittels der Pits gespeicherten Daten gelesen werden. Im Idealfall strahlt ohne Pit kein Licht auf den ringförmigen Photodetektor 25, dagegen bilden sich hinter einem Pit die Beugungsmaxima erster Ordnung auf dem Photodetektor 25 ab. Am Ausgang des Verstärkers 26 liegt daher das Datensignal PS, das die mittels der Pits auf dem Aufzeichnungsträger 5 gespeicherten Daten enthält.

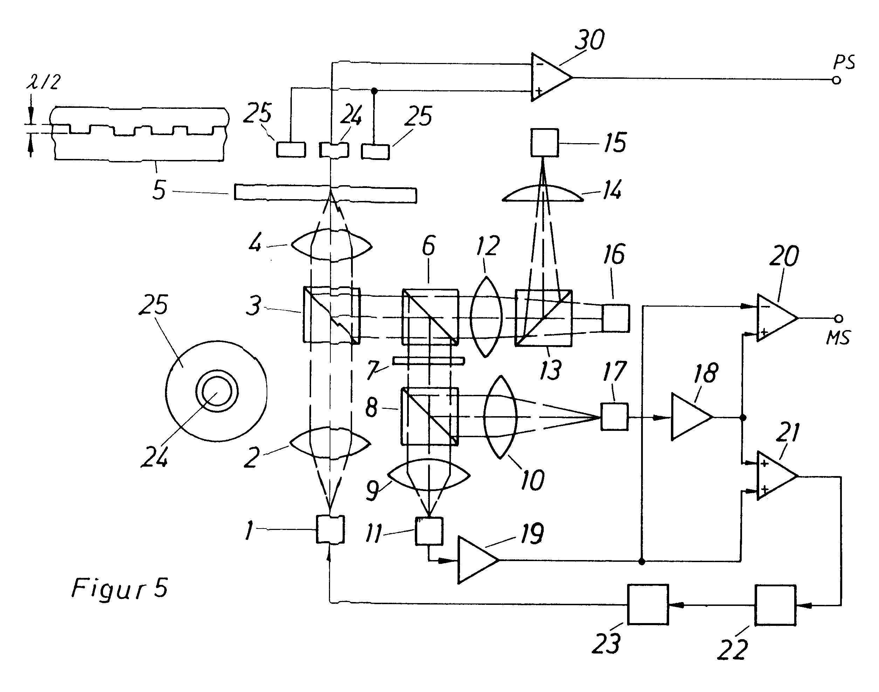

Schließlich ist es auch möglich, wie ein fünftes Ausführungsbeispiel der Erfindung in Figur 5 zeigt, beide Photodetektoren 24 und 25 derart miteinander zu kombinieren, daß der kreisförmige Photodetektor 24 vom ringförmigen Photodetektor 25 umgeben ist. Mit dem kreisförmigen Photodetektor 24 werden die nicht gebeugten Lichtstrahlen erfaßt, mit dem ringförmigen Photodetektor 25 dagegen die Beugungsstrahlen erster Ordnung detektiert. Der Ausgang des kreisförmigen Photodetektors 24 ist mit dem Subtraktionseingang eines Differenzverstärkers 30 verbunden, während der Ausgang des ringförmigen Photodetektors 25 mit dem Additionseingang des Differenzverstärkers 30 verbunden ist. Weil die Signale dieser beiden Photodetektoren 24 und 25 stets unterschiedliche Vorzeichen haben, liefert die am Ausgang des Differenzverstärkers 30 anliegende Differenz dieser beiden Signale die mittels der Pits auf dem Aufzeichnungsträger 5 gespeicherten Daten.

Bei den in den Figuren 3, 4 und 5 gezeigten Ausführungsbeispielen können der Summationsverstärker 21, der Regler 22 und der Modulator 23 entfallen. Anstelle des Modulators 23 ist jedoch zur Regelung des Lasers ein Lasertreiber vorzusehen.

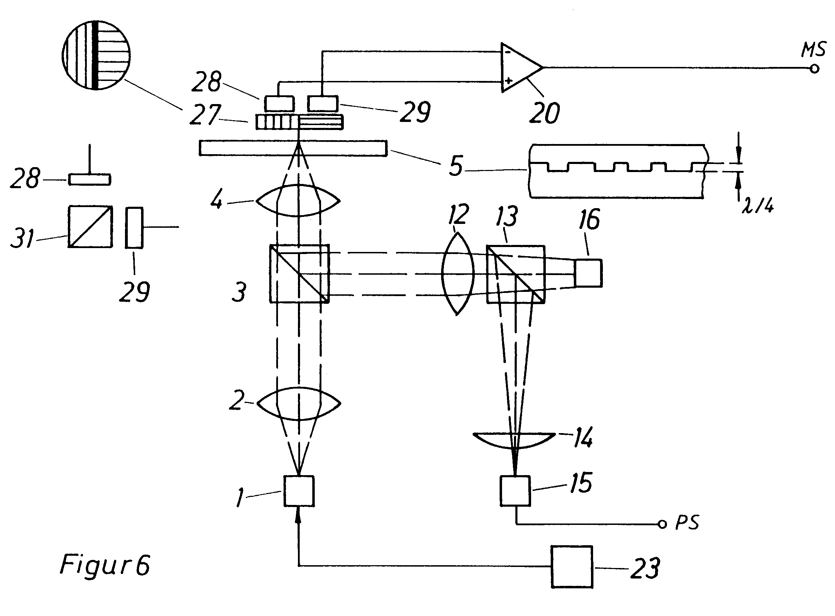

Es wird nun das in Figur 6 gezeigte sechste Ausführungsbeispiel der Erfindung beschrieben und erläutert.

Mit diesem Ausführungsbeispiel werden Daten von einem Aufzeichnungsträger gelesen, dessen Pit-Tiefe zu $\lambda/4$ gewählt ist, so daß der Gangunterschied $\lambda/2$ beträgt. Anstelle von $\lambda/4$ kann die Pit-Tiefe auch ungeradzahlige Vielfache von $\lambda/4$ betragen. Entscheidend ist allein, daß der Gangunterschied zwischen dem an einem Pit und dem in seiner Umgebung reflektierten Licht $\lambda/2$ oder $\lambda/2 + n \cdot \lambda$ beträgt, wobei n eine ganze Zahl ist.

Im Unterschied zu dem zuvor erwähnten magneto-optischen Aufzeichnungsträger enthält das reflektierte Licht die mittels der Pits gespeicherten Daten, während im durchstrahlenden Licht die magnetisch gespeicherten Daten enthalten sind. Zum Lesen der magnetisch gespeicherten Daten wird anstelle des Kerr-Effektes der ähnliche Faraday-Effekt genutzt.

Bei dem in Figur 6 gezeigten Ausführungsbeispiel läuft der von einem Laser 1, dessen Lichtleistung von einem Lasertreiber 23 geregelt wird, erzeugte Lichtstrahl über eine Linse 2, einen Prismenstrahlteiler 3 und eine Linse 4 zum Aufzeichnungsträger 5. Ein Teil des vom Laser 1 ausgesendeten Lichts wird vom Aufzeichnungsträger 5 über die Linse 4 zurück zum Prismenstrahlteiler 3 reflektiert, der einen Lichtstrahl über eine Linse 12 und einen Prismenstrahlteiler 13 auf einen Photodetektor 16 lenkt, aus dessen Ausgangssignalen das Spurfehlersignal TE für den Spurregelkreis erzeugt wird. Der Prismenstrahlteiler 13 lenkt einen Lichtstrahl aber auch über eine Linse 14 auf einen Photodetektor 15, der z.B. als Vierquadrantendetektor aus vier quadratförmigen Photodioden A, B, C und D aufgebaut sein kann. Aus den Ausgangssignalen des Photodetektors 15 werden das Fokusfehlersignal FE für den Fokusregelkreis und das Datensignal PS gewonnen, das die mittels der Pits auf dem Aufzeichnungsträger 5 gespeicherten Daten enthält. Hinter dem Aufzeichnungsträger 5 ist ein Polarisator 27 vorgesehen, der z.B. als kreis- oder quadratförmiges Polarisationsfilter ausgeführt ist. Die eine Hälfte des Polarisationsfilters 27 läßt nur die Lichtstrahlen durch, deren Polarisationsebene in die eine Richtung gedreht ist, während die andere Hälfte diejenigen Lichtstrahlen durchläßt, deren Polarisationsebene in die andere Richtung gedreht ist. Hinter der einen Hälfte des Polarisationsfilters 27 ist ein Photodetektor 28, hinter der anderen Hälfte ein weiterer Photodetektor 29 angeordnet. Die beiden Photodetektoren 28 und 29 sind mit den Eingängen eines Differenzverstärkers 20 verbunden.

Wegen des Polarisationsfilters 27 strahlt entweder auf den einen Photodetektor 28 oder auf den anderen Photodetektor 29 mehr Licht, je nachdem, in welche Richtung die einzelnen magnetischen Domänen des Aufzeichnungsträgers 5 magnetisiert sind. Am Ausgang des Differenzverstärkers 20 ist daher das Datensignal MS abnehmbar, das die in den magnetischen Domänen gespeicherten Daten enthält.

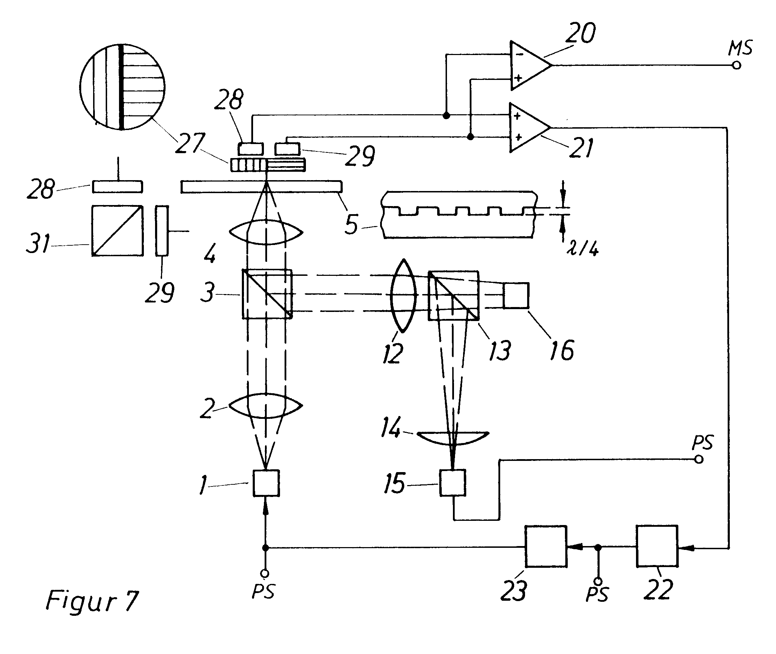

In der Figur 7 ist eine Ausgestaltung des in Figur 6 abgebildeten Ausführungsbeispieles gezeigt, die durch einen Summationsverstärker 21, einen Regler 22 und einen Modulator 23 in der Weise ergänzt ist, daß die beiden Photodetektoren 28 und 29 mit den Eingängen des Summationsverstärkers 21 verbunden sind, dessen Ausgang mit dem Eingang des Reglers 22 verbunden ist. Der Ausgang des Reglers 22 ist mit dem Eingang des Modulators 23 verbunden, dessen Ausgang mit dem Steuereingang des Lasers 1 verbunden ist. Bei diesem Ausführungsbeispiel wird ebenfalls die Intensität des vom Aufzeichnungsträger 5 reflektierten Lichts mittels des Modulators 23 auf einen konstanten Wert geregelt. Deshalb ist das Datensignal PS, das die mittels der Pits gespeicherten Daten enthält, auch am Ausgang des Reglers 22 oder des Modulators 23 abgreifbar. Das Datensignal PS läßt sich auch wie beim vorhergehenden Ausführungsbeispiel am Ausgang des Vierquadrantendetektors 15 abnehmen.

Anstelle des Polarisationsfilters kann ein Polarisationsstrahlteiler 31 eingesetzt werden, der Licht, dessen Polarisationskomponente in die eine Richtung gedreht ist, auf den einen Photodetektor 28 lenkt, während er Licht, dessen Polarisationskomponente in die andere Richtung gedreht ist, auf den anderen Photodetektor 29 lenkt.

Beim Polarisationsstrahlteiler sind die Lichtverluste zwar geringer als beim Polarisationsfilter, jedoch ist ein Polarisationsfilter billiger als ein Polarisationsstrahlteiler; außerdem benötigt ein einfaches Filter weniger Platz als ein Strahlteiler.

Alle Ausführungsbeispiele, bei denen die Intensität des vom Aufzeichnungsträger reflektierten Lichts auf einen konstanten Wert geregelt wird, können mit einem zusätzlichen Photodetektor ausgestattet sein, der das vom Aufzeichnungsträger reflektierte Licht empfängt und dessen Ausgangssignal dem Modulator 23 zur Modulation des Lasers 1 zugeführt wird. Es kann aber auch beispielsweise die Monitordiode des Lasers für diesen Zweck eingesetzt werden. Bei diesem Ausführungsbeispiel moduliert das Ausgangssignal der Monitordiode den Laser.

Mit der erfindungsgemäßen optischen Abtastvorrichtung können gleichzeitig vom neuartigen Aufzeichnungsträger die in den magnetischen Domänen und in den Pits enthaltenen Daten gelesen werden. Außerdem ist es sogar möglich, die in den Pits enthaltenen Daten zu lesen und gleichzeitig Daten in die magnetischen Domänen zu schreiben. Eine herkömmliche CD-Platte oder magneto-optische Platte kann ebenfalls von der erfindungsgemäßen optischen Abtastvorrichtung gelesen werden.

Die Erfindung ist insbesondere für die Datenverarbeitung geeignet, weil gleichzeitig Daten gelesen und aufgezeichnet werden können. Aber auch bei CD-Spielern und Videoplattenspielern bietet die Erfindung den Vorteil, daß gleichzeitig mit der Wiedergabe auch Ton und Bild aufgenommen werden können. Ein wesentlicher Vorteil des neuartigen Aufzeichnungsträgers, eine Kombination aus einer ROM-Disc und einer RAM-Disc, besteht darin, daß seine Speicherkapazität doppelt so groß ist, wie die einer ROM- oder einer RAM-Disc, also einer CD-Platte oder magneto-optischen Platte.

## Patentansprüche

1.  Verfahren für eine optische Abtastvorrichtung zum Lesen und/oder Beschreiben eines optischen und/oder eines magneto-optischen Aufzeichnungsträgers (5), wobei eine Lichtquelle (1) Licht auf den Aufzeichnungsträger (5) strahlt und wobei das vom Aufzeichnungsträger (5) reflektierte Licht in Abhängigkeit von seiner Polarisationsrichtung auf einen ersten Photodetektor (11) oder auf einen zweiten Photodetektor (17) gelenkt wird, wobei aus der Differenz der Photospannungen des ersten und zweiten Photodetektors (11, 17) das Datensignal (MS) gewonnen wird, das die in den magnetischen Domänen des Aufzeichnungsträgers (5) gespeicherten Daten enthält, und wobei aus der Summe der Photospannungen des ersten und zweiten Photodetektors (11, 17) das Datensignal (PS) gewonnen wird, das die in den Pits des Aufzeichnungsträgers (5) gespeicherten Daten enthält, **dadurch gekennzeichnet,** daß die Summe der Photospannungen des ersten und zweiten Photodetektors (11, 17) die Lichtleistung der Lichtquelle (1) moduliert oder daß ein vierter Photodetektor vorgesehen ist, der das vom Aufzeichnungsträger reflektierte Licht empfängt und dessen Ausgangssignal die Lichtleistung der Lichtquelle moduliert.

2.  Verfahren für eine optische Abtastvorrichtung zum Lesen und/oder Beschreiben eines optischen und/oder eines magneto-optischen Aufzeichnungsträgers (5), bei dem eine Lichtquelle (1) Licht auf den Aufzeichnungsträger (5) strahlt, der Aufzeichnungsträger (5) einen Teil des Lichts auf einen ersten Photodetektor (15) reflektiert, an dessen Ausgang das Datensignal (PS) abnehmbar ist, das die mittels Pits auf dem Aufzeichnungsträger gespeicherten Daten enthält, **dadurch gekennzeichnet,** daß ein Teil des von der Lichtquelle (1) ausgestrahlten Lichts den Aufzeichnungsträger (5) durchstrahlt, daß das den Aufzeichnungsträger (5) durchstrahlende Licht in Abhängigkeit von seiner Polarisationsrichtung von einem hinter dem Aufzeichnungsträger (5) vorgesehenen Polarisator (27) auf einen zweiten Photodetektor (28) oder auf einen dritten Photodetektor (29) gelenkt wird und daß die Ausgänge des zweiten und dritten Photodetektors (28, 29) mit den Eingängen eines Differenzverstärkers (20) verbunden sind, an dessen Ausgang das Datensignal (MS) abnehmbar ist, das die in den magnetischen Domänen des Aufzeichnungsträgers (5) gespeicherten Daten enthält.

3.  Verfahren für eine optische Abtastvorrichtung zum Lesen und/oder Beschreiben eines optischen und/oder eines magneto-optischen Aufzeichnungsträgers (5), bei dem eine Lichtquelle (1) Licht auf den Aufzeichnungsträger (5) strahlt, **dadurch gekennzeichnet,** daß ein Teil des von der Lichtquelle (1) ausgestrahlten Lichts den Aufzeichnungsträger (5) durchstrahlt, daß das den Aufzeichnungsträger (5) durchstrahlende Licht in Abhängigkeit von seiner Polarisationsrichtung von einem hinter dem Aufzeichnungsträger (5) vorgesehenen Polarisator (27) auf einen zweiten Photodetektor (28) oder auf einen dritten Photodetektor (29) gelenkt wird, daß die Ausgänge des zweiten und dritten Photodetektors (28, 29) mit den Eingängen eines Differenzverstärkers (20) verbunden sind, an dessen Ausgang das Datensignal (MS) abnehmbar ist, das die in den magnetischen Domänen des Aufzeichnungsträgers (5) gespeicherten Daten enthält, daß die Summe der Photospannungen des zweiten und dritten Photodetektors (28, 29) die Lichtleistung der Lichtquelle (1) moduliert und daß die Summe der Photospannungen des zweiten und dritten Photodetektors (28, 29) das die mittels Pits auf dem Aufzeichnungsträger gespeicherten Daten enthält.

4. Verfahren für eine optische Abtastvorrichtung zum Lesen und/oder Beschreiben eines optischen und/oder eines magneto-optischen Aufzeichnungsträgers (5), wobei eine Lichtquelle (1) Licht auf den Aufzeichnungsträger (5) strahlt, wobei das vom Aufzeichnungsträger (5) reflektierte Licht in Abhängigkeit von seiner Polarisationsrichtung auf einen ersten Photodetektor (11) oder auf einen zweiten Photodetektor (17) gelenkt wird und wobei aus der Differenz der Photospannungen des ersten und zweiten Photodetektors (11, 17) das Datensignal (MS) gewonnen wird, das die in den magnetischen Domänen des Aufzeichnungsträgers (5) gespeicherten Daten enthält, **dadurch gekennzeichnet,** daß das Datensignal (PS), das die mittels Pits im Aufzeichnungsträger (5) gespeicherten Daten enthält, nach dem Durchlichtverfahren mittels eines hinter dem Aufzeichnungsträger (5) vorgesehenen dritten Photodetektors (24, 25) gewonnen wird.

5. Verfahren für eine optische Abtastvorrichtung zum Lesen und/oder Beschreiben eines optischen und/oder eines magneto-optischen Aufzeichnungsträgers (5), wobei eine Lichtquelle (1) Licht auf den Aufzeichnungsträger (5) strahlt und wobei das vom Aufzeichnungsträger (5) reflektierte Licht in Abhängigkeit von seiner Polarisationsrichtung auf einen ersten Photodetektor (11) oder auf einen zweiten Photodetektor (17) gelenkt wird, wobei aus der Summe der Photospannungen des ersten und zweiten Photodetektors (11, 17) das Datensignal (PS) gewonnen wird, das die in den Pits des Aufzeichnungsträgers (5) gespeicherten Daten enthält, und wobei die Differenz der Photospannungen des ersten und zweiten Photodetektors (11, 17) gebildet wird, **dadurch gekennzeichnet,** daß das Differenzsignal der Photospannungen des ersten und zweiten Photodetektors (11, 17) durch deren Summensignal geteilt wird und daß das so gebildete Quotientensignal das Datensignal (MS) darstellt, das in den magnetischen Domänen gespeichert ist.

6. Verfahren nach Anspruch 4, **dadurch gekennzeichnet,** daß die Summe der Photospannungen des ersten und zweiten Photodetektors (11, 17) die Lichtleistung der Lichtquelle (1) moduliert.

7. Verfahren nach Anspruch 4, **dadurch gekennzeichnet,** daß ein vierter Photodetektor vorgesehen ist, der das vom Aufzeichnungsträger reflektierte Licht empfängt und dessen Ausgangssignal die Lichtleistung der Lichtquelle moduliert.

8. Verfahren nach Anspruch 4, 6 oder 7 **dadurch gekennzeichnet,** daß der hinter dem Aufzeichnungsträger (5) vorgesehene dritte Photodetektor (24) kreisförmig ausgeführt ist.

9. Verfahren nach Anspruch 4, 6 oder 7 **dadurch gekennzeichnet,** daß der hinter dem Aufzeichnungsträger (5) vorgesehene dritte Photodetektor (25) ringförmig ausgebildet ist.

10. Verfahren nach Anspruch 4, 6 oder 7, **dadurch gekennzeichnet,** daß der hinter dem Aufzeichnungsträger (5) vorgesehene dritte Photodetektor (25) die Beugungsmaxima erster Ordnung detektiert.

11. Verfahren nach Anspruch 4, 6 oder 7, **dadurch gekennzeichnet,** daß hinter dem Aufzeichnungsträger (5) ein kreisförmiger Photodetektor (24) vorgesehen ist, der von einem ringförmigen Photodetektor (25) umgeben ist, der die Beugungsmaxima erster Ordnung detektiert.

12. Verfahren nach Anspruch 4, 6, 7, 8 oder 9, **dadurch gekennzeichnet,** daß der Ausgang des hinter dem Aufzeichnungsträger (5) vorgesehenen dritten Photodetektors (24, 25) mit dem Eingang eines ersten Verstärkers (26) verbunden ist, an dessen Ausgang das Datensignal (PS) abnehmbar ist, das die mittels Pits auf dem Aufzeichnungsträger (5) gespeicherten Daten enthält.

13. Verfahren nach Anspruch 11, **dadurch gekennzeichnet,** daß der ringförmige Photodetektor (25) und der kreisförmige Photodetektor (24) mit den Eingängen eines ersten Differenzverstärkers (30) verbunden sind, an dessen Ausgang das Datensignal (PS) abnehmbar ist, das die mittels Pits auf dem Aufzeichnungsträger (5) gespeicherten Daten enthält.

**14.** Verfahren nach Anspruch 1 oder 6, **dadurch gekennzeichnet,** daß die Summe der Photospannungen des ersten und zweiten Photodetektors (11, 17) in einem Summationsverstärker (21) gebildet wird, dessen Ausgang mit dem Eingang eines Modulators (23) verbunden ist, der die Lichtleistung der Lichtquelle (1) steuert, und daß das Datensignal (PS), das die in den Pits des Aufzeichnungsträgers (5) gespeicherten Daten enthält, am Ausgang des Modulators (23) abnehmbar ist.

**15.** Verfahren nach Anspruch 2, **dadurch gekennzeichnet,** daß die Summe der Photospannungen des zweiten und dritten Photodetektors (28, 29) in einem Summationsverstärker (21) gebildet wird, dessen Ausgang über einen Regler (22) mit dem Eingang eines Modulators (23) verbunden ist, der die Lichtleistung der Lichtquelle (1) steuert, und daß am Ausgang des Modulators (23) oder des Reglers (22) das Datensignal (PS) abnehmbar ist, das die in den Pits des Aufzeichnungsträgers (5) gespeicherten Daten enthält.

**16.** Optische Abtastvorrichtung zur Durchführung des Verfahrens nach Anspruch 1, 3, 4 oder 6, wobei der von der Lichtquelle (1) erzeugte Lichtstrahl über eine erste Linse (2), einen ersten Prismenstrahlteiler (3) und eine zweite Linse (4) auf den Aufzeichnungsträger (5) strahlt, wobei der vom Aufzeichnungsträger (5) reflektierte Lichtstrahl über die zweite Linse (4) zum ersten Prismenstrahlteiler (3) zurückläuft, wo er zu einem zweiten Prismenstrahlteiler (6) gelenkt wird, wobei der zweite Prismenstrahlteiler (6) einen Lichtstrahl über eine dritte Linse (12) und einen dritten Prismenstrahlteiler (13) auf einen vierten Photodetektor (16) lenkt, aus dessen Ausgangssignalen das Spurfehlersignal für einen Spurregelkreis gebildet wird, wobei der dritte Prismenstrahlteiler (13) einen Lichtstrahl über eine vierte Linse (14) auf einen fünften Photodetektor (15) lenkt, aus dessen Ausgangssignalen das Fokusfehlersignal für einen Fokusregelkreis gebildet wird, wobei der zweite Prismenstrahlteiler (6) einen Lichtstrahl über eine λ/2-Platte (7), einen Polarisationsstrahlteiler (8) und eine fünfte Linse (9) auf den ersten Photodetektor (11) lenkt und wobei der Polarisationsstrahlteiler (8) einen Lichtstrahl über eine sechste Linse (10) auf den zweiten Photodetektor (17) lenkt, **dadurch gekennzeichnet,** daß der Ausgang des ersten Photodetektors (11) über einen ersten Verstärker (19) mit dem Subtraktionseingang eines Differenzverstärkers (20) verbunden ist, daß der Ausgang des zweiten Photodetektors (17) über einen zweiten Verstärker (18) mit dem Additionseingang des Differenzverstärkers (20) verbunden ist und daß am Ausgang des Differenzverstärkers (20) das Datensignal (MS) abnehmbar ist, das die in den magnetischen Domänen des Aufzeichnungsträgers (5) gespeicherten Daten enthält.

**17.** Optische Abtastvorrichtung zur Durchführung des Verfahrens nach Anspruch 1, 4, 6 oder 14, wobei der von der Lichtquelle (1) erzeugte Lichtstrahl über eine erste Linse (2), einen ersten Prismenstrahlteiler (3) und eine zweite Linse (4) auf den Aufzeichnungsträger (5) strahlt, wobei der vom Aufzeichnungsträger (5) reflektierte Lichtstrahl über die zweite Linse (4) zum ersten Prismenstrahlteiler (3) zurückläuft, wo er zu einem zweiten Prismenstrahlteiler (6) gelenkt wird, wobei der zweite Prismenstrahlteiler (6) einen Lichtstrahl über eine dritte Linse (12) und einen dritten Prismenstrahlteiler (13) auf einen vierten Photodetektor (16) lenkt, aus dessen Ausgangssignalen das Spurfehlersignal für einen Spurregelkreis gebildet wird, wobei der dritte Prismenstrahlteiler (13) einen Lichtstrahl über eine vierte Linse (14) auf einen fünften Photodetektor (15) lenkt, aus dessen Ausgangssignalen das Fokusfehlersignal für einen Fokusregelkreis gebildet wird, wobei der zweite Prismenstrahlteiler (6) einen Lichtstrahl über eine λ/2-Platte (7), einen Polarisationsstrahlteiler (8) und eine fünfte Linse (9) auf den ersten Photodetektor (11) lenkt und wobei der Polarisationsstrahlteiler (8) einen Lichtstrahl über eine sechste Linse (10) auf den zweiten Photodetektor (17) lenkt, **dadurch gekennzeichnet,** daß der Ausgang des ersten Photodetektors (11) über einen ersten Verstärker (19) mit den einen Eingang eines Summationsverstärkers (21) und mit dem Subtraktionseingang eines Differenzverstärkers (20) verbunden ist, daß der Ausgang des zweiten Photodetektors (17) über einen zweiten Verstärker (18) mit dem anderen Eingang des Summationsverstärkers (21) und mit dem Additionseingang des Differenzverstärkers (20) verbunden ist, daß der Ausgang des Summationsverstärkers (21) über einen Regler (22) mit einem Modulator (23) verbunden ist, dessen Ausgang mit dem Steuereingang der Lichtquelle (1) verbunden ist, daß am Ausgang des Differenzverstärkers (20) das Datensignal (MS) abnehmbar ist, das die in den magnetischen Domänen des Aufzeichnungsträgers (5) gespeicherten Daten enthält, und daß am Ausgang des Modulators (23) das Datensignal (PS) abnehmbar ist, das die mittels Pits im Aufzeichnungsträger (5) gespeicherten Daten enthält.

**18.** Optische Abtastvorrichtung zur Durchführung des Verfahrens nach Anspruch 5, wobei der von der Lichtquelle (1) erzeugte Lichtstrahl über eine erste Linse (2), einen ersten Prismenstrahlteiler (3) und eine zweite Linse (4) auf den Aufzeichnungsträger (5) strahlt, wobei der vom Aufzeichnungsträger (5) reflektierte Lichtstrahl über die zweite Linse (4) zum ersten Prismenstrahlteiler (3) zurückläuft, wo er zu einem zweiten Prismenstrahlteiler (6) gelenkt wird, wobei der zweite Prismenstrahlteiler (6) einen Lichtstrahl über eine dritte Linse (12) und einen dritten Prismenstrahlteiler (13) auf einen vierten Photodetektor (16) lenkt, aus dessen Ausgangssignalen das Spurfehlersignal für einen Spurregelkreis gebildet wird, wobei der dritte Prismenstrahlteiler (13) einen Lichtstrahl über eine vierte Linse (14) auf einen fünften Photodetektor (15) lenkt, aus dessen Ausgangssignalen das Fokusfehlersignal für einen Fokusregelkreis gebildet wird, wobei der zweite Prismenstrahlteiler (6) einen Lichtstrahl über eine λ/2-Platte (7), einen Polarisationsstrahlteiler (8) und eine fünfte Linse (9) auf den ersten Photodetektor (11) lenkt und wobei der Polarisationsstrahlteiler (8) einen Lichtstrahl über eine sechste Linse (10) auf den zweiten Photodetektor (17) lenkt, **dadurch gekennzeichnet,** daß der Ausgang des ersten Photodetektors (11) über einen ersten Verstärker (19) mit dem einen Eingang eines Summationsverstärkers (21) und mit dem Subtraktionseingang eines Differenzverstärkers (20) verbunden ist, daß der Ausgang des zweiten Photodetektors (17) über einen zweiten Verstärker (18) mit dem anderen Eingang des Summationsverstärkers (21) und mit dem Additionseingang des Differenzverstärkers (20) verbunden ist, daß der Ausgang des Summationsverstärkers (21) mit dem einen Eingang eines Teilers (24) verbunden ist, daß der Ausgang des Differenzverstärkers (20) mit dem anderen Eingang des Teilers (24) verbunden ist, daß am Ausgang des Teilers (24) das Datensignal (MS) abnehmbar ist, das die in den magnetischen Domänen des Aufzeichnungsträgers (5) gespeicherten Daten enthält, und daß am Ausgang des Summationsverstärkers (21) das Datensignal (PS) abnehmbar ist, das die in den Pits des Aufzeichnungsträgers (5) gespeicherten Daten enthält.

**19.** Optische Abtastvorrichtung zur Durchführung des Verfahrens nach Anspruch 2 oder 15, wobei der von der Lichtquelle (1) erzeugte Lichtstrahl über eine erste Linse (2), einen ersten Prismenstrahlteiler (3) und eine zweite Linse (4) auf den Aufzeichnungsträger (5) strahlt, **dadurch gekennzeichnet,** daß hinter dem Aufzeichnungsträger (5) ein Polarisator (27) vorgesehen ist, daß der vom Aufzeichnungsträger (5) reflektierte Lichtstrahl über die zweite Linse (4) zum ersten Prismenstrahlteiler (3) zurückläuft, wo er über eine dritte Linse (12) zu einem zweiten Prismenstrahlteiler (13) gelenkt wird, daß der zweite Prismenstrahlteiler (13) den Lichtstrahl über eine vierte Linse (14) auf einen ersten Photodetektor (15) lenkt, aus dessen Ausgangssignalen das Datensignal (PS), das die mittels Pits im Aufzeichnungsträger (5) gespeicherten Daten enthält, und das Fokusfehlersignal für einen Fokusregelkreis gebildet werden, daß der zweite Prismenstrahlteiler (13) einen Lichtstrahl auf einen zweiten Photodetektor (16) lenkt, aus dessen Ausgangssignalen das Spurfehlersignal für einen Spurregelkreis gebildet wird, daß der Polarisator (27) das Licht in Abhängigkeit von seiner Polarisationsrichtung entweder auf einen dritten oder einen vierten Photodetektor (28, 29) richtet und daß der Ausgang des dritten und der Ausgang des vierten Photodetektors (28, 29) mit den Eingängen eines Differenzverstärkers (20) verbunden sind, an dessen Ausgang das Datensignal (MS) abnehmbar ist, das die in den magnetischen Domänen des Aufzeichnungsträgers (5) gespeicherten Daten enthält.

**20.** Optische Abtastvorrichtung nach Anspruch 19, **dadurch gekennzeichnet,** daß als Polarisator (27) ein Polarisationsstrahlteiler (31) vorgesehen ist.

**21.** Optische Abtastvorrichtung nach Anspruch 19, **dadurch gekennzeichnet,** daß als Polarisator (27) ein Polarisationsfilter vorgesehen ist, dessen eine Hälfte denjenigen Lichtstrahl durchläßt, dessen Polarisationsebene in die eine Richtung gedreht ist, und dessen andere Hälfte denjenigen Lichtstrahl durchläßt, dessen Polarisationsebene in die andere Richtung gedreht ist.

**Claims**

**1.** Method for an optical scanning device for the reading and/or writing of an optical and /or a magneto-optic recording medium (5), wherein a light source (1) radiates light onto the recording medium (5) and wherein the light reflected from the recording medium (5) is guided onto a first photodetector (11) or onto a second photodetector (17) in dependence on its direction of polarisation, wherein the data signal (MS), which contains the data stored in the magnetic domains of the recording medium (5), is obtained from the difference of the photoelectric voltages of the first and second photodetectors (11, 17) and wherein the data signal (PS), which contains the data stored in the pits of the recording medium (5), is obtained from the sum of the photoelectric voltages of the first and second photodetectors (11, 17), characterised in that, the sum of the photoelectric voltages of the first and second photodetectors (11, 17) modulates the light output of the light source (1) or that there is provided a fourth photodetector which receives the light reflected from the recording medium and whose output signal modulates the light output of the light source.

2. Method for an optical scanning device for the reading and/or writing of an optical and /or a magneto-optic recording medium (5), in which a light source (1) radiates light onto the recording medium (5), the recording medium (5) reflects a portion of the light onto a first photodetector (15) from whose output the data signal (PS), which contains the data stored by means of pits in the recording medium, is derivable, characterised in that, a portion of the light radiated from the light source (1) penetrates the recording medium (5), that the light penetrating the recording medium (5) is guided by a polariser (27) provided behind the recording medium (5) onto a second photodetector (28) or onto a third photodetector (29) in dependence on its direction of polarisation, and that the outputs of the second and third photodetectors (28, 29) are connected to the inputs of a differential amplifier (20) from whose output the data signal (MS), which contains the data stored in the magnetic domains of the recording medium (5), is derivable.

3. Method for an optical scanning device for the reading and/or writing of an optical and /or a magneto-optic recording medium (5), in which a light source (1) radiates light onto the recording medium (5), characterised in that, a portion of the light radiated from the light source (1) penetrates the recording medium (5), that the light penetrating the recording medium (5) is guided by a polariser (27) provided behind the recording medium (5) onto a second photodetector (28) or onto a third photodetector (29) in dependence on its direction of polarisation, that the outputs of the second and third photodetectors (28, 29) are connected to the inputs of a differential amplifier (20) from whose output the data signal (MS), which contains the data stored in the magnetic domains of the recording medium (5), is derivable, that the sum of the photoelectric voltages of the second and third photodetectors (28, 29) modulates the light output of the light source (1) and that the sum of the photoelectric voltages of the second and third photodetectors (28, 29) contains the data stored by means of the pits in the recording medium.

4. Method for an optical scanning device for the reading and/or writing of an optical and /or a magneto-optic recording medium (5), wherein a light source (1) radiates light onto the recording medium (5), wherein the light reflected from the recording medium (5) is guided onto a first photodetector (11) or onto a second photodetector (17) in dependence on its direction of polarisation, and wherein the data signal (MS), which contains the data stored in the magnetic domains of the recording medium (5), is obtained from the difference of the photoelectric voltages of the first and second photodetectors (11, 17), characterised in that, the data signal (PS), which contains the data stored by means of the the pits in the recording medium (5), is obtained in accordance with the transmitted light process by means of a third photodetector (24, 25) provided behind the recording medium (5).

5. Method for an optical scanning device for the reading and/or writing of an optical and /or a magneto-optic recording medium (5), wherein a light source (1) radiates light onto the recording medium (5), and wherein the light reflected from the recording medium (5) is guided onto a first photodetector (11) or onto a second photodetector (17) in dependence on its direction of polarisation, wherein the data signal (PS), which contains the data stored in the pits of the recording medium (5), is obtained from the sum of the photoelectric voltages of the first and second photodetectors (11, 17), and wherein the difference of the photoelectric voltages of the first and second photodetectors (11, 17) is formed, characterised in that, the difference signal of the photoelectric voltages of the first and second photodetectors (11, 17) is divided by their sum signal and that the so-formed quotient signal represents the data signal (MS) which is stored in the magnetic domains.

6. Method in accordance with claim 4, characterised in that, the sum of the photoelectric voltages of the first and second photodetectors (11, 17) modulates the light output of the light source (1).

7. Method in accordance with claim 4, characterised in that, a fourth photodetector is provided which receives light reflected from the recording medium and whose output signal modulates the light output of the light source.

8. Method in accordance with claim 4, 6 or 7, characterised in that, the third photodetector (24) provided behind the recording medium (5) is shaped in the form of a circle.

9. Method in accordance with claim 4, 6 or 7, characterised in that, the third photodetector (25) provided behind the recording medium (5) is shaped in the form of a ring.

10. Method in accordance with claim 4, 6 or 7, characterised in that, the third photodetector (25) provided behind the recording medium (5) detects the diffraction maxima of first order.

11. Method in accordance with claim 4, 6 or 7, characterised in that, behind the recording medium (5) there is provided a photodetector (24) in the form of a circle which is surrounded by a ring shaped photodetector (25) which detects the diffraction maxima of first order.

12. Method in accordance with claim 4, 6 7, 8 or 9, characterised in that, the output of the third photodetector (24, 25) provided behind the recording medium (5) is connected to the input of a first amplifier (26) from whose output the data signal (PS), which contains the data stored by means of pits in the recording medium (5), is derivable.

13. Method in accordance with claim 11, characterised in that, the ring shaped photodetector (25) and the circular shaped photodetector (24) are connected to the inputs of a first differential amplifier (30) from whose output the data signal (PS), which contains the data stored by means of pits in the recording medium (5), is derivable.

14. Method in accordance with claim 1 or 6, characterised in that, the sum of the photoelectric voltages of the first and second photodetectors (11, 17) is formed in a summing amplifier (21) whose output is connected to the input of a modulator (23) which controls the light output of the light source (1) and that the data signal (PS) which contains the data stored in the pits of the recording medium (5), is derivable at the output of the modulator (23).

15. Method in accordance with claim 2, characterised in that, the sum of the photoelectric voltages of the second and third photodetectors (28, 29) is formed in a summing amplifier (21) whose output is connected via a regulator (22) to the input of a modulator (23) which controls the light output of the light source (1) and that the data signal (PS) which contains the data stored in the pits of the recording medium (5), is derivable at the output of the modulator (23) or the regulator (22).

16. Optical scanning device for carrying out the method in accordance with claim 1, 3, 4 or 6 wherein the light beam produced by the light source (1) shines via a first lens, a first prismatic beam splitter (3) and a second lens (4) onto the recording medium (5), wherein the light beam reflected from the recording medium (5) passes back via the second lens (4) to the first prismatic beam splitter (3) where it is guided to a second prismatic beam splitter (6), wherein the second prismatic beam splitter (6) guides a light beam via a third lens (12) and a third prismatic beam splitter (13) onto a fourth photodetector (16) from whose output signals the tracking error signal for a tracking control loop is formed, wherein the third prismatic beam splitter (13) guides a light beam via a fourth lens (14) onto a fifth photodetector (15) from whose output signals the focusing error signal for a focusing control loop is formed, wherein the second prismatic beam splitter (6) guides a light beam via a λ/2 plate (7), a polarisation beam splitter (8) and a fifth lens (9) onto the first photodetector (11) and wherein the polarisation beam splitter (8) guides a light beam via a sixth lens (10) onto the second photodetector (17), characterised in that, the output of the first photodetector (11) is connected to the subtracting input of a differential amplifier (20) via a first amplifier (19), that the output of the second photodetector (17) is connected to the summing input of the differential amplifier (20) via a second amplifier (18) and that the data signal (MS), which contains the data stored in the magnetic domains of the recording medium (5), is derivable from the output of the differential amplifier (20).

17. Optical scanning device for carrying out the method in accordance with claim 1, 4, 6 or 14 wherein the light beam produced by the light source (1) shines via a first lens (2), a first prismatic beam splitter (3) and a second lens (4) onto the recording medium (5), wherein the light beam reflected from the recording medium (5) passes back via the second lens (4) to the first prismatic beam splitter (3) where it is guided to a second prismatic beam splitter (6), wherein the second prismatic beam splitter (6) guides a light beam via a third lens (12) and a third prismatic beam splitter (13) onto a fourth photodetector (16) from whose output signals the tracking error signal for a tracking control loop is formed, wherein the third prismatic beam splitter (13) guides a light beam via a fourth lens (14) onto a fifth photodetector (15) from whose output signals the focusing error signal for a focusing control loop is formed, wherein the second prismatic beam splitter (6) guides a light beam via a $\lambda/2$ plate (7), a polarisation beam splitter (8) and a fifth lens (9) onto the first photodetector (11) and wherein the polarisation beam splitter (8) guides a light beam via a sixth lens (10) onto the second photodetector (17), characterised in that, the output of the first photodetector (11) is connected via a first amplifier (19) to the one input of a summing amplifier (21) and to the subtracting input of a differential amplifier (20), that the output of the second photodetector (17) is connected via a second amplifier (18) to the other input of the summing amplifier (21) and to the summing input of the differential amplifier (20), that the output of the summing amplifier (21) is connected via a regulator (22) to a modulator (23) whose output is connected to the control input of the light source (1), that the data signal (MS), which contains the data stored in the magnetic domains of the recording medium (5), is derivable from the output of the differential amplifier (20) and that the data signal (PS), which contains the data stored by means of pits in the recording medium (5) is derivable from the output of the modulator (23).

18. Optical scanning device for carrying out the method in accordance with claim 5, wherein the light beam produced by the light source (1) shines via a first lens (2), a first prismatic beam splitter (3) and a second lens (4) onto the recording medium (5), wherein the light beam reflected from the recording medium (5) passes back via the second lens (4) to the first prismatic beam splitter (3) where it is guided to a second prismatic beam splitter (6), wherein the second prismatic beam splitter (6) guides a light beam via a third lens (12) and a third prismatic beam splitter (13) onto a fourth photodetector (16) from whose output signals the tracking error signal for a tracking control loop is formed, wherein the third prismatic beam splitter (13) guides a light beam via a fourth lens (14) onto a fifth photodetector (15) from whose output signals the focusing error signal for a focusing control loop is formed, wherein the second prismatic beam splitter (6) guides a light beam via a $\lambda/2$ plate (7), a polarisation beam splitter (8) and a fifth lens (9) onto the first photodetector (11) and wherein the polarisation beam splitter (8) guides a light beam via a sixth lens (10) onto the second photodetector (17), characterised in that, the output of the first photodetector (11) is connected via a first amplifier (19) to the one input of a summing amplifier (21) and to the subtracting input of a differential amplifier (20), that the output of the second photodetector is connected via a second amplifier (18) to the other input of the summing amplifier (21) and to the summing input of the differential amplifier (20), that the output of the summing amplifier (21) is connected to the one input of a divider (24), that the output of the differential amplifier (20) is connected to the other input of the divider (24), that the data signal (MS), which contains the data stored in the magnetic domains of the recording medium (5), is derivable from the output of the divider (24), and that the data signal (PS), which contains the data stored in the pits in the recording medium (5) is derivable from the output of the summing amplifier (21).

19. Optical scanning device for carrying out the method in accordance with claim 2 or 15, wherein the light beam produced by the light source (1) shines via a first lens (2), a first prismatic beam splitter (3) and a second lens (4) onto the recording medium (5), characterised in that, a polariser (27) is provided behind the recording medium (5), that the light beam reflected from the recording medium (5) passes back via the second lens (4) to the first prismatic beam splitter (3) where it is guided via a third lens (12) to a second prismatic beam splitter (13), that the second prismatic beam splitter (13) guides the light beam via a fourth lens (14) onto a first photodetector (15) from whose output signals the data signal (PS), which contains the data stored by means of pits in the recording medium (5) and the focusing error signal for a focusing control loop are formed, that the second prismatic beam splitter (13) guides a light beam onto a second photodetector (16) from whose output signals the tracking error signal for a tracking control loop is formed, that the polariser (27) directs the light, in dependence on its direction of polarisation, either onto a third or a fourth photodetector (28, 29) and that the output of the third and the output of the fourth photodetector (28) are connected to the inputs of a differential amplifier (20) from whose output the data signal (MS), which contains the data stored in the magnetic domains of the recording medium (5) is derivable.

20. Optical scanning device in accordance with claim 19, characterised in that, a polarisation beam splitter (31) is provided as the polariser (27).

21. Optical scanning device in accordance with claim 19, characterised in that, a polarisation filter is provided as the polariser (27), whose one half transmits that light beam whose plane of polarisation is rotated in the one direction and whose other half transmits that light beam whose plane of polarisation is rotated in the other direction.

## Revendications

1. Procédé pour un dispositif d'exploration optique pour lire et/ou enregistrer sur un support d'enregistrement optique et/ou magnéto-optique (5), une source de lumière (1) rayonnant de la lumière sur le support d'enregistrement (5) et la lumière réfléchie par le support d'enregistrement (5) étant guidée, en fonction de son sens de polarisation, sur un premier détecteur photoélectrique (11) ou sur un second détecteur photoélectrique (17), le signal de données (MS), qui contient les données mémorisées dans les domaines magnétiques du support d'enregistrement (5), étant obtenu à partir de la différence des tensions photoélectriques du premier et du second détecteur photoélectrique (11, 17), et le signal de données (PS), qui contient les données mémorisées dans les creux du support d'enregistrement (5), étant obtenu à partir de la somme des tensions photoélectriques du premier et du second détecteur photoélectrique (11, 17), **caractérisé en ce** que la somme des tensions photoélectriques du premier et du second détecteur photoélectrique (11, 17) module le flux lumineux de la source de lumière (1) ou qu'il est prévu un quatrième détecteur photoélectrique qui reçoit la lumière réfléchie par le support d'enregistrement et dont le signal de sortie module le flux lumineux de la source de lumière.

2. Procédé pour un dispositif d'exploration optique pour lire et/ou enregistrer sur un support d'enregistrement optique et/ou magnéto-optique (5), dans lequel une source de lumière (1) rayonne de la lumière sur le support d'enregistrement (5), le support d'enregistrement (5) réfléchit une partie de la lumière sur un premier détecteur photoélectrique (15) à la sortie duquel le signal de données (PS), qui contient les données mémorisées sur le support d'enregistrement au moyen des creux, peut être prélevé, **caractérisé en ce** qu'une partie de la lumière émise par la source de lumière (1) rayonne à travers le support d'enregistrement (5), que la lumière qui rayonne à travers le support d'enregistrement (5) est guidée, en fonction de son sens de polarisation, par un polariseur (27) prévu derrière le support d'enregistrement (5), sur un second détecteur photoélectrique (28) ou sur un troisième détecteur photoélectrique (29) et que les sorties du second et du troisième détecteur photoélectrique (28, 29) sont reliées aux entrées d'un amplificateur différenciateur (20) à la sortie duquel le signal de données (MS), qui contient les données mémorisées dans les domaines magnétiques du support d'enregistrement (5), peut être prélevé.

3. Procédé pour un dispositif d'exploration optique pour lire et/ou enregistrer sur un support d'enregistrement optique et/ou magnéto-optique (5), dans lequel une source de lumière (1) rayonne de la lumière sur le support d'enregistrement (5), **caractérisé en ce** qu'une partie de la lumière émise par la source de lumière (1) rayonne à travers le support d'enregistrement (5), que la lumière qui rayonne à travers le support d'enregistrement (5) est guidée, en fonction de son sens de polarisation, par un polariseur (27) prévu derrière le support d'enregistrement (5), sur un second détecteur photoélectrique (27) ou sur un troisième détecteur photoélectrique (28), que les sorties du second et du troisième détecteur photoélectrique (28, 29) sont reliées aux entrées d'un amplificateur différenciateur (20) à la sortie duquel le signal de données (MS), qui contient les données mémorisées dans les domaines magnétiques du support d'enregistrement (5), peut être prélevé, que la somme des tensions électriques du second et du troisième détecteur photoélectrique (28, 29) module le flux lumineux de la source de lumière (1) et que la somme des tensions photoélectriques du second et du troisième détecteur photoélectrique (28, 29) contient les données mémorisées sur le support d'enregistrement au moyen des creux.

4. Procédé pour un dispositif d'exploration optique pour lire et/ou enregistrer sur un support d'enregistrement optique et/ou magnéto-optique (5), une source de lumière (1) rayonnant de la lumière sur le support d'enregistrement (5), la lumière réfléchie par le support d'enregistrement (5) étant guidée, en fonction de son sens de polarisation, sur un premier détecteur photoélectrique (11) ou sur un second détecteur photoélectrique (17), et le signal de données (MS), qui contient les données mémorisées dans les domaines magnétiques du support d'enregistrement (5), étant obtenu à partir de la différence des tensions photoélectriques du premier et du second détecteur photoélectrique (11, 17), **caractérisé en ce** que le signal de données (PS), qui contient les données mémorisées dans le support d'enregistrement (5) au moyen des creux, est obtenu selon le procédé par transmission au moyen d'un troisième détecteur photoélectrique (24, 25) prévu derrière le support d'enregistrement (5).

5. Procédé pour un dispositif d'exploration optique pour lire et/ou enregistrer sur un support d'enregistrement optique et/ou magnéto-optique (5), une source de lumière (1) rayonnant de la lumière sur le support d'enregistrement (5) et la lumière réfléchie par le support d'enregistrement (5) étant guidée, en fonction de son sens de polarisation, sur un premier détecteur photoélectrique (11) ou sur un second détecteur photoélectrique (17), le signal de données (PS), qui contient les données mémorisées dans les creux du support d'enregistrement (5), étant obtenu à partir de la somme des tensions photoélectriques du premier et du second détecteur photoélectrique (11, 17), la différence des tensions photoélectriques du premier et du second détecteur photoélectrique (11, 17) étant formée, **caractérisé en ce** que le signal de différence des tensions photoélectriques du premier et du second détecteur photoélectrique (11, 17) est divisé par leur signal de somme et que le signal de quotient ainsi formé représente le signal de données (MS) qui est mémorisé dans les domaines magnétiques.

6. Procédé selon la revendication 4, **caractérisé en ce** que la somme des tensions photoélectriques du premier et du second détecteur photoélectrique (11, 17) module le flux lumineux de la source de lumière (1).

7. Procédé selon la revendication 4, **caractérisé en ce** qu'il est prévu un quatrième détecteur photoélectrique qui reçoit la lumière réfléchie par le support d'enregistrement et dont le signal de sortie module le flux lumineux de la source de lumière.

8. Procédé selon la revendication 4, 6 ou 7, **caractérisé en ce** que le troisième détecteur photoélectrique (24) prévu derrière le support d'enregistrement (5) est configuré de forme circulaire.

9. Procédé selon la revendication 4, 6 ou 7, **caractérisé en ce** que le troisième détecteur photoélectrique (24) prévu derrière le support d'enregistrement (5) est configuré de forme annulaire.

10. Procédé selon la revendication 4, 6 ou 7, **caractérisé en ce** que le troisième détecteur photoélectrique (25) prévu derrière le support d'enregistrement (5) détecte les maxima de diffraction de premier ordre.

11. Procédé selon la revendication 4, 6 ou 7, **caractérisé en ce** qu'il est prévu derrière le support d'enregistrement (5) un détecteur photoélectrique circulaire (24) qui est entouré par un détecteur photoélectrique annulaire (25) qui détecte les maxima de diffraction de premier ordre.

12. Procédé selon la revendication 4, 6, 7, 8 ou 9, **caractérisé en ce** que la sortie du troisième détecteur photoélectrique (24, 25) qui est prévu derrière le support d'enregistrement (5) est reliée à l'entrée d'un premier amplificateur (26) à la sortie duquel le signal de données (PS), qui contient les données mémorisées sur le support d'enregistrement (5) au moyen des creux, peut être prélevé.

13. Procédé selon la revendication 11, **caractérisé en ce** que le détecteur photoélectrique annulaire (25) et le détecteur photoélectrique circulaire (24) sont reliés aux entrées d'un premier amplificateur différenciateur (30) à la sortie duquel le signal de données (PS), qui contient les données mémorisées sur le support d'enregistrement (5) au moyen des creux, peut être prélevé.

14. Procédé selon la revendication 1 ou 6, **caractérisé en ce** que la somme des tensions photoélectriques du premier et du second détecteur photoélectrique (11, 17) est formée dans un amplificateur d'addition (21) dont la sortie est reliée à l'entrée d'un modulateur (23) qui commande le flux lumineux de la source de lumière (1) et que le signal de données (PS), qui contient les données mémorisées dans les creux du support d'enregistrement (5), peut être prélevé à la sortie du modulateur (23).

**15.** Procédé selon la revendication 2, **caractérisé en ce** que la somme des tensions photoélectriques du second et du troisième détecteur photoélectrique (28, 29) est formée dans un amplificateur d'addition (21) dont la sortie est reliée, par l'intermédiaire d'un régulateur (22), à l'entrée d'un modulateur (23) qui commande le flux lumineux de la source de lumière (1) et que le signal de données (PS), qui contient les données mémorisées dans les creux du support d'enregistrement (5), peut être prélevé à la sortie du modulateur (23) ou du régulateur (22).

**16.** Dispositif d'exploration optique pour réaliser le procédé selon la revendication 1, 3, 4 ou 6, le rayon de lumière produit par la source de lumière (1) rayonnant, en passant par une première lentille (2), un premier séparateur de faisceaux à prismes (3) et une seconde lentille (4), sur le support d'enregistrement (5), le rayon de lumière réfléchi par le support d'enregistrement (5) retournant, en passant par la seconde lentille (4), au premier séparateur de faisceaux à prismes (3) où il est guidé vers un second séparateur de faisceaux à prismes (6), le second séparateur de faisceaux à prismes (6) guidant un rayon de lumière, en passant par une troisième lentille (12) et un troisième séparateur de faisceaux à prismes (13), sur un quatrième détecteur photoélectrique (16) à partir des signaux de sortie duquel le signal d'erreur de piste pour un circuit de réglage de piste est formé, le troisième séparateur de faisceaux à prismes (13) guidant un rayon de lumière, en passant par une quatrième lentille (14), sur un cinquième détecteur photoélectrique (15) à partir des signaux de sortie duquel le signal d'erreur de foyer pour un circuit de réglage de foyer est formé, le second séparateur de faisceaux à prismes (6) guidant un rayon de lumière, en passant par une lame λ/2 (7), un séparateur de faisceaux de polarisation (8) et une cinquième lentille (9), sur le premier détecteur photoélectrique (11) et le séparateur de faisceaux de polarisation (8) guidant un rayon de lumière, en passant par une sixième lentille (10), sur le second détecteur photoélectrique (17), **caractérisé en ce** que la sortie du premier détecteur photoélectrique (11) est reliée par l'intermédiaire d'un premier amplificateur (19) à l'entrée de soustraction d'un amplificateur différenciateur (20), que la sortie du second détecteur photoélectrique (17) est reliée, par l'intermédiaire d'un second amplificateur (18), à l'entrée d'addition de l'amplificateur différenciateur (20) et que le signal de données (MS), qui contient les données mémorisées dans les domaines magnétiques du support d'enregistrement (5), peut être prélevé à la sortie de l'amplificateur différenciateur (20).

**17.** Dispositif d'exploration optique pour réaliser le procédé selon la revendication 1, 3, 4, 6 ou 14, le rayon de lumière produit par la source de lumière (1) rayonnant, en passant par une première lentille (2), un premier séparateur de faisceaux à prismes (3) et une seconde lentille (4), sur le support d'enregistrement (5), le rayon de lumière réfléchi par le support d'enregistrement (5) retournant, en passant par la seconde lentille (4), sur le premier séparateur de faisceaux à prismes (3) où il est guidé vers un second séparateur de faisceaux à prismes (6), le second séparateur de faisceaux à prismes (6) guidant un rayon de lumière, en passant par une troisième lentille (12) et un troisième séparateur de faisceaux à prismes (13), sur un quatrième détecteur photoélectrique (16) à partir des signaux de sortie duquel le signal d'erreur de piste pour un circuit de réglage de piste est formé, le troisième séparateur de faisceaux à prismes (13) guidant un rayon de lumière, en passant par une quatrième lentille (14), sur un cinquième détecteur photoélectrique (15) à partir des signaux de sortie duquel le signal d'erreur de foyer pour un circuit de réglage de foyer est formé, le second séparateur de faisceaux à prismes (6) guidant un rayon de lumière, en passant par une lame λ/2 (7), un séparateur de faisceaux de polarisation (8) et une cinquième lentille (9), sur le premier détecteur photoélectrique (11) et le séparateur de faisceaux de polarisation (8) guidant un rayon de lumière, en passant par une sixième lentille (10), sur le second détecteur photoélectrique (17), **caractérisé en ce** que la sortie du premier détecteur photoélectrique (11) est reliée par l'intermédiaire d'un premier amplificateur (19) à l'une des entrées d'un amplificateur d'addition (21) et à l'entrée de soustraction d'un amplificateur différenciateur (20), que la sortie du second détecteur photoélectrique (17) est reliée, par l'intermédiaire d'un second amplificateur (18), à l'autre entrée de l'amplificateur d'addition (21) et à l'entrée d'addition de l'amplificateur différenciateur (20), que la sortie de l'amplificateur d'addition (21) est reliée par un régulateur (22) à un modulateur (23), dont la sortie est reliée à l'entrée de commande de la source de lumière (1), que le signal de données (MS), qui contient les données mémorisées dans les domaines magnétiques du support d'enregistrement (5), peut être prélevé à la sortie de l'amplificateur différenciateur (20) et que le signal de données (PS), qui contient les données mémorisées dans le support d'enregistrement (5) au moyen des creux, peut être prélevé à la sortie du modulateur (23).

18. Procédé d'exploration optique pour réaliser le procédé selon la revendication 5, le rayon de lumière produit par la source de lumière (1) rayonnant, en passant par une première lentille (2), un premier séparateur de faisceaux à prismes (3) et une seconde lentille (4), sur le support d'enregistrement (5), le rayon de lumière réfléchi par le support d'enregistrement (5) retournant, en passant par la seconde lentille (4), sur le premier séparateur de faisceaux à prismes (3) où il est guidé vers un second séparateur de faisceaux à prismes (6), le second séparateur de faisceaux à prismes (6) guidant un rayon de lumière, en passant par une troisième lentille (12) et un troisième séparateur de faisceaux à prismes (13), sur un quatrième détecteur photoélectrique (16) à partir des signaux de sortie duquel le signal d'erreur de piste pour un circuit de réglage de piste est formé, le troisième séparateur de faisceaux à prismes (13) guidant un rayon de lumière, en passant par une quatrième lentille (14), sur un cinquième détecteur photoélectrique (15) à partir des signaux de sortie duquel le signal d'erreur de foyer pour un circuit de réglage de foyer est formé, le second séparateur de faisceaux à prismes (6) guidant un rayon de lumière, en passant par une lame λ/2 (7), un séparateur de faisceaux de polarisation (8) et une cinquième lentille (9), sur le premier détecteur photoélectrique (11) et le séparateur de faisceaux de polarisation (8) guidant un rayon de lumière, en passant par une sixième lentille (10), sur le second détecteur photoélectrique (17), **caractérisé en ce** que la sortie du premier détecteur photoélectrique (11) est reliée par l'intermédiaire d'un premier amplificateur (19) à l'une des entrées d'un amplificateur d'addition (21) et à l'entrée de soustraction d'un amplificateur différenciateur (20), que la sortie du second détecteur photoélectrique (17) est reliée, par l'intermédiaire d'un second amplificateur (18), à l'autre entrée de l'amplificateur d'addition (21) et à l'entrée d'addition de l'amplificateur différenciateur (20), que la sortie de l'amplificateur d'addition (21) est reliée à l'une des entrées d'un diviseur (24), que la sortie de l'amplificateur différenciateur (20) est reliée à l'autre entrée du diviseur (24), que le signal de données (MS), qui contient les données mémorisées dans les domaines magnétiques du support d'enregistrement (5), peut être prélevé à la sortie du diviseur (24) et que le signal de données (PS), qui contient les données mémorisées dans les creux du support d'enregistrement (5), peut être prélevé à la sortie de l'amplificateur d'addition (21).

19. Dispositif d'exploration optique pour réaliser le procédé selon la revendication 2 ou 15, le rayon de lumière produit par la source de lumière (1) rayonnant, en passant par une première lentille (2), un premier séparateur de faisceaux à prismes (3) et une seconde lentille (4), sur le support d'enregistrement (5), **caractérisé en ce** qu'il est prévu un polariseur (27) derrière le support d'enregistrement (5), que le rayon de lumière réfléchi par le support d'enregistrement (5) est renvoyé, par l'intermédiaire de la seconde lentille (4), vers le premier séparateur de faisceaux à prismes (3) où il est guidé, par l'intermédiaire d'une troisième lentille (12), vers un second séparateur de faisceaux à prismes (13), que le second séparateur de faisceaux à prismes (13) guide le rayon de lumière, par une quatrième lentille (14), sur un premier détecteur photoélectrique (15), à partir des signaux de sortie duquel le signal de données (PS), qui contient les données mémorisées sur le support d'enregistrement (5) au moyen des creux, et le signal d'erreur de foyer pour un circuit de réglage de foyer sont formés, que le second séparateur de faisceaux à prismes (13) guide un rayon de lumière sur un second détecteur photoélectrique (16) à partir des signaux de sortie duquel le signal d'erreur de piste pour un circuit de réglage de piste est formé, que le polariseur (27) oriente la lumière, en fonction de son sens de polarisation, soit sur un troisième, soit sur un quatrième détecteur photoélectrique (28, 29) et que la sortie du troisième et la sortie du quatrième détecteur photoélectrique (28, 29) sont reliées aux entrées d'un amplificateur différenciateur (20) à la sortie duquel le signal de données (MS), qui contient les données mémorisées dans les domaines magnétiques du support d'enregistrement (5), peut être prélevé.

20. Dispositif d'exploration optique selon la revendication 19, **caractérisé en ce** qu'un séparateur de faisceaux de polarisation (31) est prévu comme polariseur (27).

21. Dispositif d'exploration optique selon la revendication 19, **caractérisé en ce** qu'un filtre de polarisation est prévu comme polariseur (27) dont l'une des moitiés transmet le rayon de lumière dont le plan de polarisation est tourné dans l'un des sens et dont l'autre moitié transmet le rayon de lumière dont le plan de polarisation est tourné dans l'autre sens.

Fig. 1

EP 0 310 795 B1

Fig.2

EP 0 310 795 B1

Figur 3

λ/2

PS

MS

EP 0 310 795 B1

Figur 4

Figur 5

Figur 6

MS

28
27
29
20
5
λ/4
28
31
29
4
12
13
16
3
2
14
1
15
PS
23

EP 0 310 795 B1

Figur 7

Figur 8

Figur 9